# FASCICULE DE BREVET EUROPEEN

(11) **EP 0 449 704 B1**
(45) Date de publication et mention de la délivrance du brevet: **26.06.1996**
(21) Numéro de dépôt: 91400747.1
(22) Date de dépôt: 20.03.1991
(51) Int. Cl.: B60L 5/32

(54) **pantographe**
Scherenstromabnehmer
pantograph

(30) Priorité: 28.03.1990 FR 9003941
(43) Date de publication de la demande: 02.10.1991
(73) Titulaire: FAIVELEY TRANSPORT, F-93200 Saint-Denis (FR)
(72) Inventeur: Forte, Pascal, F-37200 Tours (FR); Blanvillain, Gérard, F-37270 Veretz (FR)
(74) Mandataire: Keib, Gérard

(56) Documents cités:
- FR-A- 619 394
- FR-A- 1 124 759

## Description

La présente invention concerne un pantographe pour motrices ferroviaires.

Certains pantographes utilisent, pour appliquer un effort de contact régulier entre leurs bandes de frottement et le fil caténaire, des moyens de suspension de type pneumatique. Typiquement, on dispose d'un coussin étanche comportant deux flasques opposés séparés par une paroi flexible dont l'un est solidaire de la structure du véhicule et l'autre peut suivre un mouvement de translation qui est transmis à la tête de captage par un mécanisme de renvoi approprié. Un circuit pneumatique et un compresseur permettent d'établir une pression de service P_{S} prédéterminée dans le coussin qui remplit alors sa fonction de suspension.

Le déploiement du pantographe vers une position opérationnelle où les bandes de frottement sont en contact avec le fil caténaire est effectué en amenant la pression dans le coussin d'une valeur sensiblement nulle (quand le circuit est désactivé) jusqu'à la valeur P_{S} désirée. Cette montée en pression se fait habituellement de manière progressive en injectant dans le coussin de l'air délivré par le compresseur via un régulateur de pression. La vitesse de cette montée en pression doit être relativement faible pour éviter un accostage brutal des bandes de frottement sur le fil caténaire qui serait une cause de détérioration de ces organes. Il en résulte un délai excessif entre la commande et l'accostage car il faut notamment attendre que la pression dans le coussin passe d'une valeur pratiquement nulle à une valeur suffisante pour amorcer le mouvement de déploiement proprement dit, c'est-à-dire à une valeur qui équilibre le poids du pantographe qui le maintient replié sur ses butées basses. Cette étape est en général la plus longue. En pratique, on désire que le délai total reste inférieur à 10 secondes, ce que les dispositifs de l'art antérieur ne permettent pas d'obtenir.

On connaît également un pantographe, divulgué par le brevet FR-A-619 394, dont le fonctionnement comprend une première phase, dans laquelle de l'air comprimé délivré par un conduit d'alimentation pousse un premier piston, ce qui fait effectuer une première fraction de la montée du pantographe, par l'intermédiaire de ressorts, et une seconde phase, dans laquelle de l'air délivré par le conduit d'alimentation pousse un second piston, ce qui fait effectuer la fin de la montée du pantographe par l'intermédiaire des ressorts.

Le déploiement du pantographe se divise donc en deux déploiements successifs correspondant aux translations des deux pistons.

On souhaite également que le pantographe puisse être déconnecté et replié de manière rapide dans certaines circonstances, par exemple lorsque le conducteur du véhicule aperçoit un obstacle interposé accidentellement sur le fil caténaire qui risquerait d'endommager le pantographe en cas de choc si celui-ci reste déployé.

Un tel déclenchement peut s'effectuer en faisant chuter la pression dans le coussin mais il en résulte un risque de détérioration lors de l'arrivée du pantographe contre les butées basses. Si on s'efforce de ménager ces organes, il faut se contenter d'un repli relativement plus lent qui se traduit par une efficacité moindre.

Le but de la présente invention est un pantographe permettant d'apporter une solution efficace aux problèmes ci-dessus tout en évitant une détérioration prématurée du pantographe, de la structure de support du véhicule ou de la ligne caténaire.

L'invention vise ainsi un pantographe tel que défini par la revendication 1 destiné à alimenter en électricité des motrices ferroviaires depuis une ligne caténaire, ce pantographe étant mis en mouvement par un dispositif pneumatique alimenté par un compresseur, comprenant, lors du déploiement du pantographe vers la ligne, une première étape de montée en pression rapide dans le dispositif pneumatique jusqu'à une valeur de consigne de l'ordre de la pression nécessaire pour amorcer le mouvement de déploiement du pantographe.

D'autres particularités et avantages de l'invention apparaîtront dans la description ci-après, en référence aux dessins non limitatifs annexés dans lesquels :
- la figure 1 est une vue en perspective d'un pantographe en position déployée pour la mise en oeuvre de l'invention,
- les figures 2 à 5 montrent schématiquement un pantographe conforme à l'invention et son circuit pneumatique lors de quatre étapes du procédé selon l'invention ;
- la figure 6 montre un diagramme qui décrit la position de la tête du pantographe en fonction du temps lors de son déploiement ;
- la figure 7 montre un diagramme qui décrit la position de la tête du pantographe en fonction du temps lors de son repli.

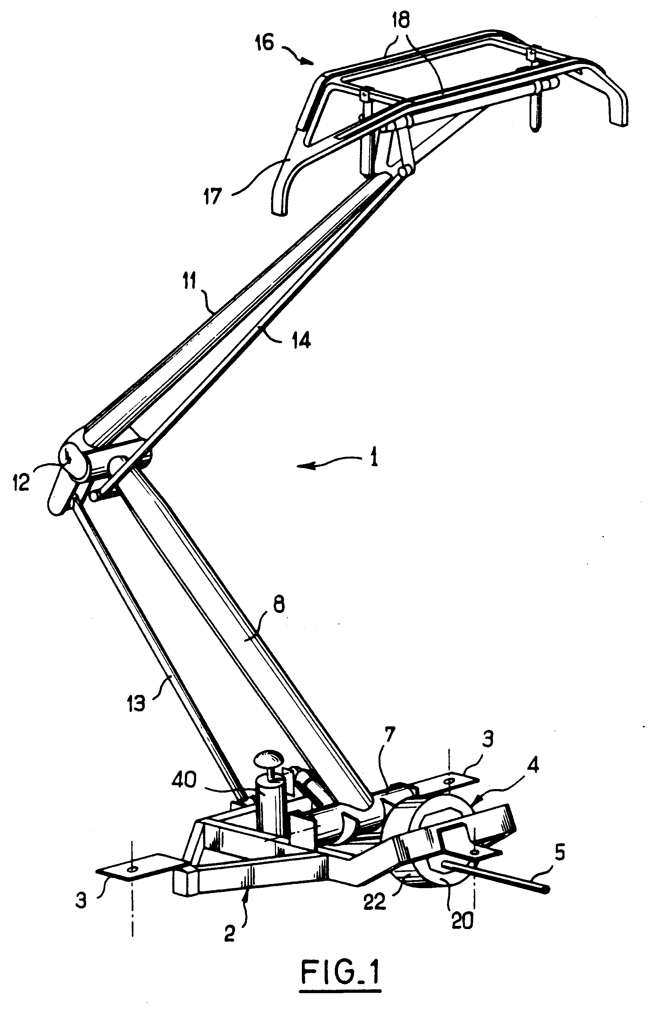

La figure 1 montre un pantographe 1 comprenant une structure de base 2 permettant son montage sur le toit d'une locomotive, ou plus généralement d'une rame ferroviaire, non représentée. Pour cela, la structure 2 est munie de brides de montage 3.

A la structure 2 est également fixé un coussin pneumatique actionneur 4 agissant sur un axe 7 d'un bras inférieur 8 de la structure tubulaire, du pantographe.

Le bras inférieur 8 est relié à un bras supérieur 11, également tubulaire, par une articulation principale 12. Le pantographe 1 comporte en outre des barres de parallélogramme, inférieure et supérieure, respectivement 13 et 14.

Le bras 11 porte, à son extrémité supérieure, un archet 16 assurant le contact avec une ligne caténaire non représentée. L'archet 16 comporte une armature 17 munie de deux bandes de frottement 18.

Le coussin pneumatique 4 comprend deux flasques 20, 21 rigides circulaires dont l'un (20) est solidaire de la structure 2 et comporte une ouverture pour recevoir le raccordement 5 à l'alimentation pneumatique et l'autre (21) peut suivre un mouvement de translation qui commande le mouvement du pantographe 1 par un dispositif mécanique de renvoi approprié. Ces deux flasques 20, 21 sont reliés de manière étanche par une paroi cylindrique flexible 22. Ainsi, les variations de pression au sein du coussin 4 entraînent le déplacement des bras et de l'archet du pantographe. Un amortisseur 40 est prévu sur la structure 2 pour recevoir le bras inférieur 8 quand le pantographe est replié et pour freiner la partie finale de son mouvement de repli. Cet amortisseur 40-peut par exemple être du type hydraulique.

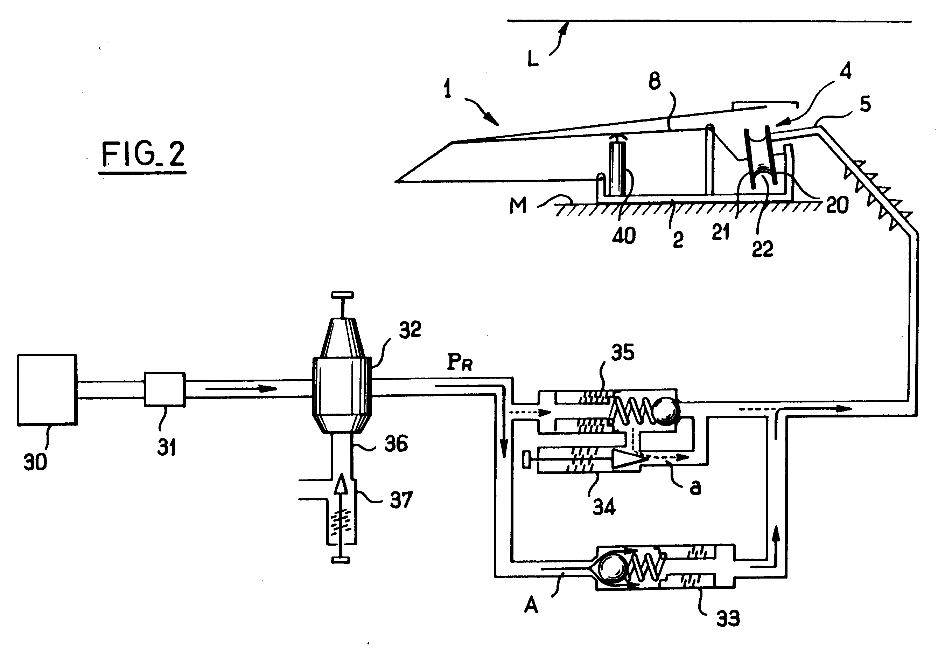

On se rapporte maintenant aux figures 2 à 5. Le coussin pneumatique 4 est relié à un compresseur 30 par l'intermédiaire d'un circuit pneumatique. Celui-ci comprend une électro-valve 31, un régulateur de pression 32 qui délivre une pression P_{R} sensiblement uniforme et un limiteur de débit 34 à débit réglable associé en parallèle à un clapet anti-retour taré 33 qui laisse s'écouler l'air du régulateur de pression 32 vers le coussin pneumatique 4 quand la pression dans le coussin 4 est inférieure à la pression P_{R} délivrée par le régulateur 32 d'au moins une valeur de tarage P_{T} et qui agit comme un obturateur dans tous les autres cas. La valeur de tarage P_{T} du clapet 33 est réglée de telle sorte que P_{R} - P_{T} soit de l'ordre de la pression nécessaire pour que le mouvement de déploiement du pantographe 1 s'amorce, c'est-à-dire de l'ordre de la pression qui équilibre les forces qui maintiennent le pantographe en position repliée (principalement le poids du pantographe).

Le régulateur de pression 32 comporte d'autre part une dérivation de mise à l'atmosphère 36 qui s'ouvre lorsque celui-ci n'est plus alimenté par le compresseur 30, c'est-à-dire par exemple lorsque l'électro-valve 31 est relachée et ainsi sa sortie mise à la purge. Cette dérivation 36 comprend un limiteur de débit 37 placé entre la sortie du régulateur 32 et l'atmosphère. Enfin, un second clapet anti-retour 35 est associé en parallèle au limiteur de débit 34 et au clapet anti-retour taré 33. Ce clapet anti-retour laisse passer l'air depuis le coussin pneumatique 4 vers le régulateur de pression 32.

Ce pantographe et son installation pneumatique permettent d'effectuer un déploiement du pantographe 1 en deux étapes illustrées sur les figures 2, 3 et 6.

La figure 2 montre le pantographe 1 replié sur le toit de la motrice (M) et reposant sur la butée amortissante 40. L'électro-valve 31 est ouverte et envoie l'air délivré par le compresseur 30 vers le régulateur de pression 32. Celui-ci émet vers le circuit pneumatique de l'air à une pression P_{R} sensiblement uniforme. Typiquement, le compresseur 30 peut délivrer une pression fluctuante de 5 à 10 bars et P_{R} vaudra de l'ordre de 2 à 5 bars.

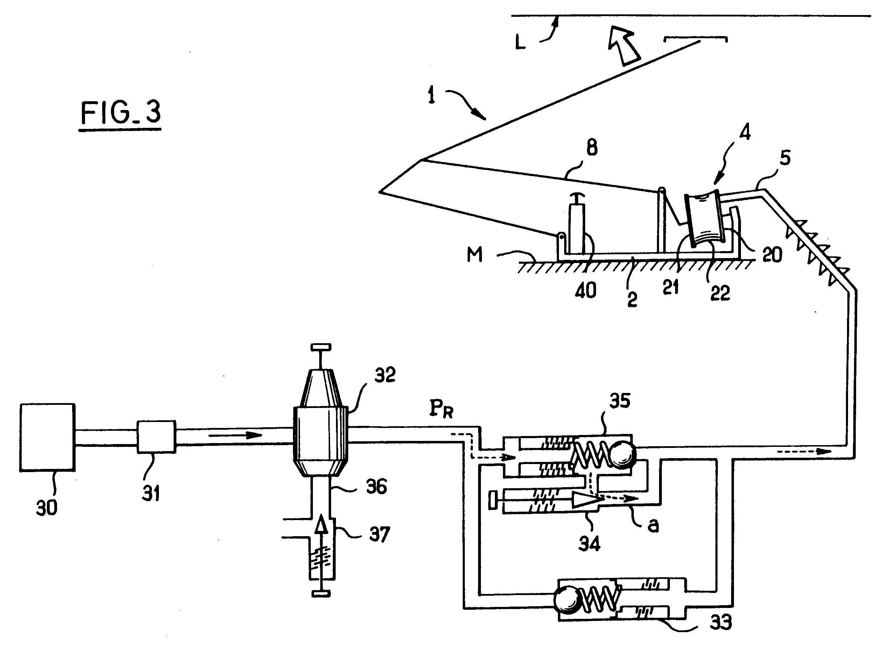

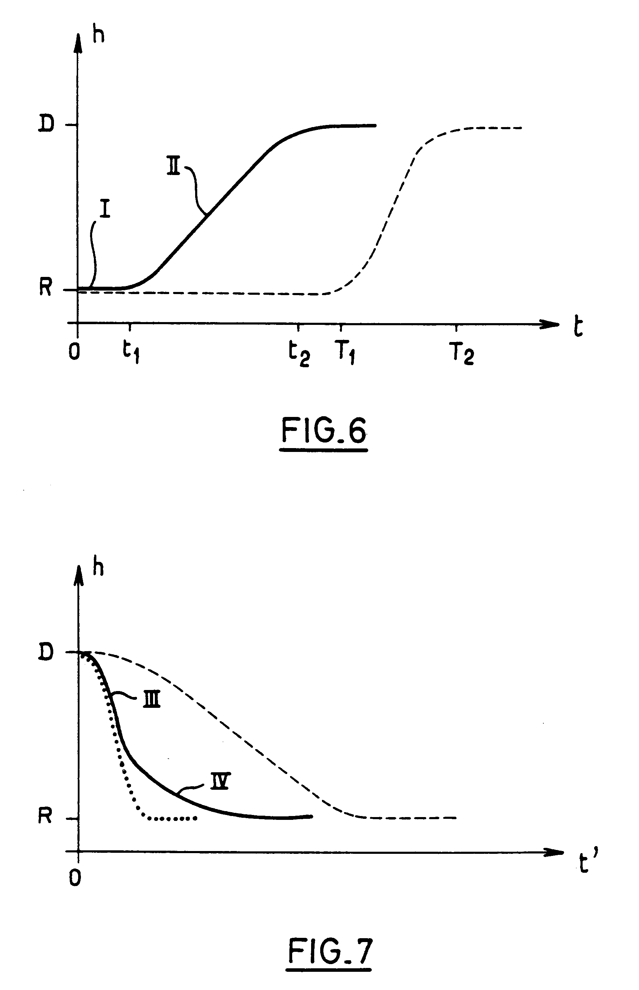

Le pantographe 1 est alors dans l'étape du déploiement notée I sur la figure 6 sur laquelle t représente le temps mesuré à partir de l'ouverture de la valve 31 et h la hauteur de la tête du pantographe qui varie entre une position repliée R et une position déployée D. Au cours de cette étape I, la pression dans le coussin 4 croît rapidement, le pantographe restant replié : l'air que délivre le régulateur 32 passe par le clapet anti-retour taré 33 comme l'indique la flèche A de la figure 2. Un débit d'air plus faible passe aussi par le limiteur de débit 34 (flèche a). Lorsque la pression dans le coussin 4 atteint la valeur de consigne P_{R} - P_{T}, le pantographe 1 est prêt à amorcer son mouvement de déploiement proprement dit. Le clapet anti-retour taré 33 se referme alors et seul le flux d'air contrôlé a contribue à la montée en pression dans le coussin 4 qui donne lieu au mouvement de déploiement : c'est l'étape II de la figure 6, au cours de laquelle le circuit est dans l'état représenté sur la figure 3.

Les avantages procurés par l'invention lors du déploiement du pantographe sont les suivants, en référence à la figure 6.

L'étape I pendant laquelle la pression dans le coussin 4 passe d'une valeur pratiquement nulle à la valeur qui permet d'amorcer le mouvement proprement dit a une durée t₁ très courte par rapport à la durée équivalente T₁ des dispositifs antérieurs dont la réponse est représentée en tirets sur la figure 6.

Comme on a gagné du temps sur cette étape I, la vitesse du mouvement du pantographe peut être relativement plus faible qu'avec les dispositifs antérieurs tout en réduisant sensiblement la durée totale t₂ entre la commande et l'accostage. Il en résulte un accostage plus doux quine risque pas d'endommager le pantographe ou la ligne caténaire (L). Cette vitesse de déploiement peut être réglée en agissant sur le débit admissible par le limiteur de débit 34 pour obtenir la pente voulue pour la portion II de la courbe de déploiement. Le délai total t₂ est très inférieur au délai total T₂ que présentent les pantographes à commande pneumatique antérieurs. Ce délai t₂ peut être inférieur à 10s pour un développement de 2 à 3 mètres.

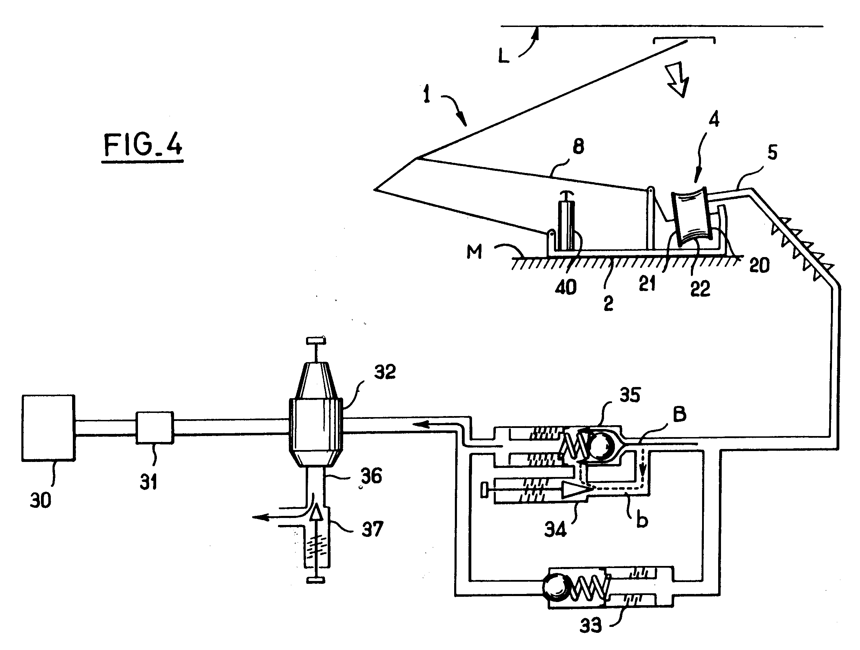

Le processus de repli du pantographe 1 se divise lui aussi en deux étapes illustrées par les figures 4, 5 et 7.

Dans l'état représenté sur la figure 4, le pantographe 1 a entamé un mouvement de repli rapide : l'électro-valve 31 a été relachée donc sa sortie mise à la purge et la dérivation de mise à l'atmosphère 36 s'est donc ouverte. En conséquence, la pression dans le coussin 4 est devenue très supérieure à la pression au niveau du régulateur 32, de sorte que le clapet anti-retour 35 a basculé en position d'ouverture. Un flux d'air B traverse donc ce clapet 35 (accompagné d'un flux plus faible b à travers le limiteur de débit 34) depuis le coussin 4 qui se contracte vers la dérivation de mise à l'atmosphère 36. La mise à l'atmosphère de la valve 31 entraîne donc une déconnexion et un repli rapides du pantographe. C'est l'étape III du diagramme de la figure 7 sur lequel les notations sont identiques à celui de la figure 6, le temps t' étant mesuré depuis la fermeture de la valve 31.

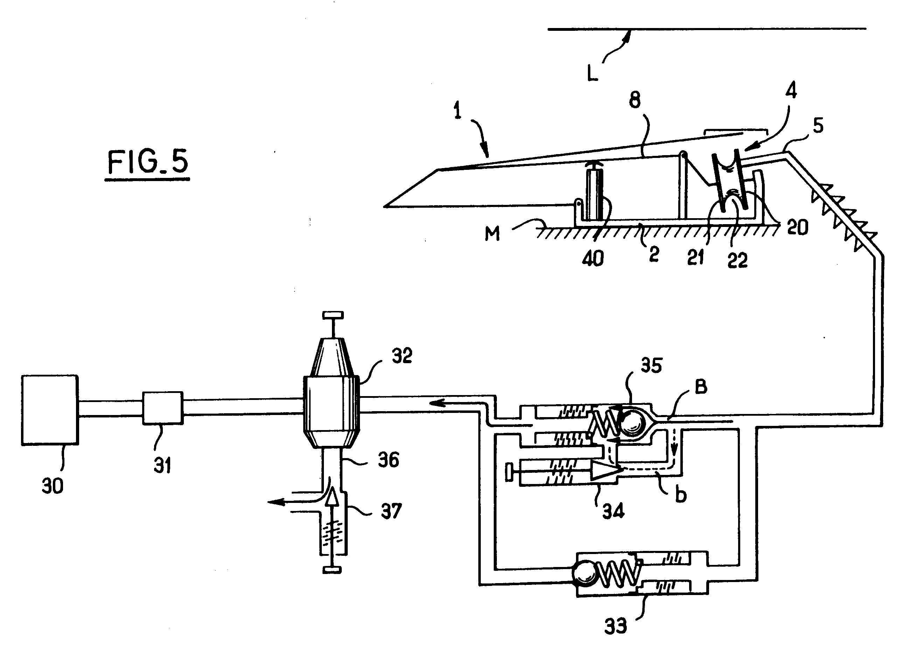

Le pantographe se replie ainsi jusqu'à ce que le bras inférieur 8 vienne en contact avec l'amortisseur de choc 40. Celui-ci freine alors la fin du mouvement de repli du pantographe comme le montre la figure 5 et l'étape IV de la figure 7. La pression dans le coussin 4 continue alors de descendre par les écoulements B et b vers la dérivation de mise à l'atmosphère 36.

Grâce à l'invention, le pantographe peut être replié immédiatement en cas de nécessité. On peut en effet faire chuter rapidement la pression dans le coussin 4 par la purge 36. On peut aussi agir sur la pente de la portion III de la courbe de repli, c'est-à-dire sur la vitesse du mouvement de repli à l'aide du limiteur de débit 37 placé sur le trajet d'évacuation de l'air. L'amortisseur de choc 40 évite la dégradation des butées du pantographe en position repliée en freinant la fin du mouvement. Cette décomposition en deux étapes III et IV est nécessaire pour résoudre le double problème du repli rapide et de l'arrivée en douceur sur les butées. Si on opère en une seule étape, on obtient soit une vitesse de repli faible (courbe en tirets sur la figure 7) qui réduit l'efficacité de la réponse du pantographe, soit un repli certes rapide mais accompagné d'un choc préjudiciable sur les butées situées sur la motrice (cas de la courbe en pointillés sur la figure 7).

L'exemple décrit ci-dessus n'est pas limitatif et l'invention inclut plusieurs autres modes de réalisation.

Ainsi, on a décrit un circuit pneumatique simple qui permet de mettre en oeuvre le procédé selon l'invention. Plusieurs autres circuits simples ou plus complexes peuvent être utilisés sans sortir du cadre de l'invention. La dérivation de mise à l'atmosphère 36, qui a été décrite au niveau du régulateur de pression 32 peut par exemple être placée en tout endroit convenant pour faire chuter la pression dans le coussin 4 et son ouverture peut être commandée de manière indépendante de l'électro-valve 31.

L'exemple détaillé montre un pantographe actionné par un coussin pneumatique. Il est entendu que l'invention inclut tout montage de même nature faisant intervenir une commande pneumatique équivalente telle qu'un piston coulissant dans un cylindre.

En outre, l'amortisseur de choc 40, qui a été décrit dans une disposition où il reçoit le bras inférieur 8 du pantographe, peut être placé de sorte qu'il reçoive une autre portion mobile du pantographe.

Le pantographe lui-même n'a pas nécessairement la structure décrite à l'aide de la figure 1. Il suffit que son mouvement soit commandé par un dispositif pneumatique.

## Revendications

1. Pantographe (1) pour alimenter en électricité des motrices ferroviaires depuis une ligne caténaire (L) comprenant un dispositif pneumatique (4) alimenté par un compresseur (30) par l'intermédiaire d'un circuit pneumatique pour commander le mouvement du pantographe (1) entre une position repliée et une position déployée, caractérisé en ce que le dispositif pneumatique comprend un actionneur pneumatique unique, ledit circuit pneumatique comportant des moyens pour faire monter rapidement la pression dans l'actionneur pneumatique (4) et pour faire monter cette pression plus lentement et de manière contrôlée lorsqu'elle dépasse une valeur de consigne pour réaliser le déploiement du pantographe (1).

2. Pantographe conforme à la revendication 1, caractérisé en ce que ladite valeur de consigne est de l'ordre de la pression nécessaire pour amorcer le mouvement de déploiement du pantographe (1), c'est-à-dire de la pression qui équilibre les forces qui maintiennent le pantographe en position repliée.

3. Pantographe conforme à l'une des revendications 1 ou 2, caractérisé en ce que ledit circuit pneumatique comprend un régulateur de pression (32) qui rend sensiblement uniforme la pression de l'air délivré par le compresseur (30) et destiné à l'alimentation de l'actionneur pneumatique (4).

4. Pantographe conforme à la revendication 3, caractérisé en ce que lesdits moyens pour faire monter rapidement la pression dans l'actionneur pneumatique (4) et pour faire monter cette pression plus lentement et de manière contrôlée lorsqu'elle dépasse une valeur de consigne comprennent une association en parallèle d'un limiteur de débit (34) et d'un clapet anti-retour taré (33) qui laisse s'écouler l'air du régulateur de pression (32) vers l'actionneur pneumatique (4) quand la pression dans l'actionneur (4) est inférieure à la pression délivrée par le régulateur (32) d'au moins une valeur de tarage et qui agit comme un obturateur dans tous les autres cas.

5. Pantographe conforme à la revendication 4, caractérisé en ce que ladite valeur de tarage du clapet anti-retour (33) est choisie comme étant la différence entre ladite valeur de consigne et la pression délivrée par la régulateur de pression (32).

6. Pantographe conforme à l'une des revendications 4 ou 5, caractérisé en ce que le limiteur de débit (34) est conformé de manière telle qu'il laisse passer un débit d'air choisi en fonction de la vitesse de déploiement du pantographe (1) désirée.

7. Pantographe conforme à l'une des revendications 1 à 6, caractérisé en ce que ledit circuit pneumatique comprend des moyens pour faire chuter la pression dans le dispositif pneumatique (4) pour réaliser la déconnexion et le repli immédiats du pantographe (1).

8. Pantographe conforme à la revendication 7, caractérisé en ce que lesdits moyens pour faire chuter la pression dans le dispositif pneumatique (4) comportent une dérivation de mise à l'atmosphère du circuit (36).

9. Pantographe conforme à la revendication 8, caractérisé en ce que l'ouverture de la dérivation de mise à l'atmosphère du circuit (36) s'effectue automatiquement dès que l'alimentation du régulateur de pression (32) par le compresseur (30) est interrompue.

10. Pantographe conforme à l'une des revendications 8 ou 9, caractérisé en ce que l'évacuation de l'air du circuit par la dérivation de mise à l'atmosphère (36) est effectuée à travers un limiteur de débit (37) pour contrôler la vitesse de repli du pantographe (1).

11. Pantographe conforme à l'une des revendications 7 à 10, caractérisé en ce qu'un amortisseur de choc (40) est prévu sur la structure de la motrice (M) contre lequel une portion du pantographe (1) vient buter au cours du mouvement de repli et qui amortit ce mouvement.

## Claims

1. A pantograph (1) for supplying current to rail cars from a catenary (L) comprising a pneumatic device (4) supplied by a compressor (30) through a pneumatic circuit for controlling the motion of the pantograph (1) from a folded position to an unfolded position and back, characterised in that the pneumatic device comprises a single pneumatic activator, said pneumatic circuit consisting of means for quickly raising pressure in the pneumatic activator (4) and for raising said pressure more slowly, in a controlled way when it exceeds a set point for achieving the unfolding of the pantograph (1).

2. A pantograph according to claim 1, characterised in that said set point is close to the pressure required for starting the pantograph (1) unfolding motion, i.e. the pressure balancing the forces maintaining the pantograph in folded position.

3. A pantograph according to one of claims 1 or 2, characterised in that said pneumatic circuit comprises a pressure regulator (32) which makes the pressure of the air delivered by the compressor (30) for the supply to the pneumatic activator (4) substantially uniform.

4. A pantograph according to claim 3, characterised in that said means for quickly raising pressure in the pneumatic activator (4) and for raising pressure more slowly and in a controlled way when it exceeds a set point include a connection in parallel of a flow limiter (34) and a spring-loaded pressure check-valve (33) which lets the air flow out of the pressure regulator (32) to the pneumatic activator (4) when the pressure in the activator (4) is lower than the pressure delivered by the regulator (32) by at least a calibration value and which acts as an shutter in any other case.

5. A pantograph according to claim 4, characterised in that said calibration value of the check-valve (33) is selected as the difference between said set point and the pressure delivered by the pressure regulator (32).

6. A pantograph according to one of claims 4 or 5, characterised in that the flow limiter (34) is designed so that it lets a selected air flow out according to the desired pantograph (1) unfolding velocity.

7. A pantograph according to one of claims 1 to 6, characterised in that said pneumatic circuit comprises means to make the pressure drop in the pneumatic device (4) for achieving the immediate disconnection and folding of the pantograph (1).

8. A pantograph according to claim 7, characterised in that said means for making the pressure drop in the pneumatic device (4) consist of a branch connection for airing the circuit (36).

9. A pantograph according to claim 8, characterised in that the opening of the branch connection for airing the circuit (36) is automatically obtained when the supply to the pressure regulator (32) by the compressor (30) is stopped.

10. A pantograph according to one of claims 8 or 9, characterised in that the exhaust of air from the circuit through the branch connection for airing (36) is made through a flow limiter (37) for controlling the pantograph folding velocity (1).

11. A pantograph according to one of claims 7 to 10, characterised in that a shock-absorber (40) is provided on the rail car (M) against which a portion of the pantograph (1) abuts when folding, and which cushions the motion.

## Patentansprüche

1. Stromabnehmer (1) für die Stromeinspeisung von Eisenbahntriebwagen von einer Fahrleitung aus (L), bestehend aus einer Druckluftvorrichtung (4), die von einem Kompressor (30) über einen Druckluftkreislauf mit Druckluft versorgt wird, um den Bewegungsablauf des Stromabnehmers (1) von der eingefahrenen Stellung in die ausgefahrene Stellung zu steuern, dadurch gekennzeichnet, daß die Druckluftvorrichtung aus einem einzigen pneumatischen Schaltglied besteht, wobei der genannte Druckluftkreislauf für das Ausfahren des Stromabnehmers (1) über Mittel verfügt, mit denen der Druck im pneumatischen Schaltglied (4) schnell erhöht bzw. beim Überschreiten eines Sollwertes langsam und kontrolliert erhöht werden kann.

2. Stromabnehmer gemäß Anspruch 1, dadurch gekennzeichnet, daß der genannte Sollwert dem Druck entspricht, der für das Ausfahren des Stromabnehmers (1) notwendig ist, d.h. derjenige Druck, der die Kräfte ausgleicht, die den Stromabnehmer in eingefahrener Stellung belassen.

3. Stromabnehmer gemäß einem der Ansprüche 1 oder 2, dadurch gekennzeichnet, daß der genannte Druckluftkreislauf aus einem Druckregler (32) besteht, der für ein gleichmäßiges Druckniveau der aus dem Kompressor kommenden und für die Druckluftversorgung des pneumatischen Schaltglieds bestimmten Druckluft sorgt.

4. Stromabnehmer gemäß Anspruch 3, dadurch gekennzeichnet, daß zu den genannten Mitteln, mit denen der Druck im pneumatischen Schaltglied (4) schnell erhöht bzw. beim Überschreiten eines Sollwertes langsam und kontrolliert erhöht werden kann, ein Durchsatzbegrenzer (34) und ein geeichtes Rückschlagventil (33) parallelarbeiten, wobei das letztere die Luft aus dem Druckregler (32) in das pneumatisch gesteuerte Schaltglied (4) entweichen läßt, sobald der Druck im Schaltglied (4) mindestens um einen Einstellwert unter dem vom Regler (32) gelieferten Druck liegt, wobei das Rückschlagventil in allen anderen Fallen die Funktion einer Verschlußvorrichtung übernimmt.

5. Stromabnehmer gemäß Anspruch 4, dadurch gekennzeichnet, daß der genannte Einstellwert des Rückschlagventils (33) der Differenz zwischen dem genannten Sollwert und dem vom Druckregler (32) gelieferten Druck entspricht.

6. Stromabnehmer gemäß einem der Ansprüche 4 oder 5, dadurch gekennzeichnet, daß der Durchsatzbegrenzer (34) so konzipiert ist, daß er in Abhängigkeit von der gewünschten Geschwindigkeit, mit der der Stromabnehmer (1) in die ausgefahrene Stellung fahren soll, die entsprechende Druckluftmenge entweichen läßt.

7. Stromabnehmer gemäß einem der Ansprüche 1 bis 6, dadurch gekennzeichnet, daß der genannte Druckluftkreislauf aus Mitteln besteht, mit denen der Druck in der Druckluftvorrichtung (4) so herabgesetzt werden kann, daß die Druckluftzufuhr unterbrochen wird bzw. sich der Stromabnehmer (1) sofort absenkt.

8. Stromabnehmer gemäß der Ansprüche 7, dadurch gekennzeichnet, daß die genannten Mittel für den Druckabfall in der Druckluftvorrichtung (4) aus einer Entlüftungsabzweigung für den Druckluftkreislauf (36) bestehen.

9. Stromabnehmer gemäß Anspruch 8, dadurch gekennzeichnet, daß sich die Entlüftungsabzweigung des Druckluftkreislaufes automatisch öffnet, sobald die Einspeisung des Druckreglers (32) durch den Kompressor (30) unterbrochen ist.

10. Stromabnehmer gemäß einem der Ansprüche 8 oder 9, dadurch gekennzeichnet, daß das Ablassen der Luft aus dem Druckluftkreislauf durch die Entlüftungsabzweigung (36) über einen Durchsatzbegrenzer (37) erfolgt, um die Geschwindigkeit mit der der Stromabnehmer (1) eingefahren wird, zu kontrollieren.

11. Stromabnehmer gemäß einem der Ansprüche 7 bis 10, dadurch gekennzeichnet, daß ein Stoßdämpfungsglied (40) auf dem Triebwagen (M) vorgesehen ist, auf das ein Teil des Stromabnehmers (1) während des Einfahrvorgangs stößt und das diese Bewegung abfängt.
